# EUROPÄISCHE PATENTSCHRIFT

(11) **EP 2 031 475 B1**
(45) Veröffentlichungstag und Bekanntmachung des Hinweises auf die Patenterteilung: **05.03.2014**
(21) Anmeldenummer: 08014809.1
(22) Anmeldetag: 21.08.2008
(51) Int. Cl.: G05D 16/20

(54) **Druckregelventil sowie hydraulische Regelanordnung mit einem Druckregelventil**
Pressure regulating valve and hydraulic regulating assembly with a pressure regulating valve
Soupape de commande de pression et dispositif de commande hydraulique doté d'une soupape de commande de pression

(30) Priorität: 29.08.2007 DE 102007041038
(43) Veröffentlichungstag der Anmeldung: 04.03.2009
(73) Patentinhaber: THOMAS MAGNETE GmbH, 57562 Herdorf (DE)
(72) Erfinder: Schulz, René Dr., 57299 Burbach (DE); Zastrau, Thomas, 57076 Siegen (DE); Oerter, Michael, 57299 Burbach (DE)
(74) Vertreter: Köchling, Conrad-Joachim

(56) Entgegenhaltungen:
- FR-A1- 2 890 431
- GB-A- 1 386 172
- US-A- 4 966 195

## Beschreibung

Die Erfindung betrifft ein Druckregelventil mit einem in einer Ventilhülse axial zur Mittellängsachse der Ventilhülse begrenzt verschieblich angeordneten Ventilschieber, einer an einem ersten Ende der Ventilhülse angeordneten Druckregelfeder, gegen die der Ventilschieber verschieblich ist und an der der Ventilschieber sich mit seinem ersten Ende abstützt, wobei der Ventilschieber durch umlaufende Nuten gebildete Strömungskanäle und Steuerflächen aufweist und die Ventilhülse in ihrem Mantel Durchgangsbohrungen aufweist, die je nach Stellung des Ventilschiebers mit den durch die Nut gebildeten Strömungskanälen in Verbindung stehen, wobei eine erste Durchgangsbohrung mit einem Speichergefäß, eine zweite Durchgangsbohrung mit einem Arbeitsanschluss und eine dritte Durchgangsbohrung mit einem Druckanschluss eines Hydraulikkreises in Verbindung steht.

Bei einer Anwendung der Erfindung kann beispielsweise das Speichergefäß die Ölwanne einer Brennkraftmaschine sein. Der Arbeitsanschluss des Druckregelventils kann beispielsweise mit einem Stellzylinder für eine regelbare Pumpe verbunden sein und der Druckanschluss kann an den Abgang einer regelbaren Pumpe angeschlossen sein, die zur Versorgung einer Brennkraftmaschine dient.

In Abhängigkeit von der Differenz zwischen dem Ausgangsdruck und einem Sollwert wird ein Arbeitsanschluss des Ventils entweder mit dem Ausgangsdruck eines Verbrauchers, beispielsweise einer Pumpe, oder deren Rücklauf verbunden. Der Arbeitsanschluss ist beispielsweise mit einem Zylinder oder einer vergleichbaren Wirkfläche verbunden, die das Hubvolumen einer Verstellpumpe verändert. Durch diese Verknüpfungen ergibt sich ein geschlossener Regelkreis, in dem der Ausgangsdruck der Pumpe auf einen Sollwert geregelt wird. Ein Schaltelement, zum Beispiel ein Schaltmagnet, ermöglicht es, den Sollwert und als Resultat der Regelung auch den Ausgangsdruck zwischen zwei festen Werten zu verändern.

Es sind viele Konzepte zur Steuerung und Regelung von Verstellpumpen bekannt, insbesondere auch Steuerungskonzepte für verstellbare Schmierölpumpen in Verbrennungsmotoren. Daneben sind proportionalwirkende Magnetventile bekannt, die in Abhängigkeit von einem geregelten elektrischen Strom den Sollwert eines Regelventils verstellen. Die Stromregelung ist jedoch in vielen Anwendungen nicht erwünscht.

Bekannt ist auch ein schaltendes Regelkonzept mit Umschaltung des Sollwertes durch einen hydraulischen Kolben, der von einem Schaltventil beaufschlagt wird. Die hydraulische Umschaltung ist jedoch aufwändig, insbesondere bei hohen Anforderungen an die Genauigkeit und an das Temperaturverhalten. Vom US4966195 ist ein solches Druckregelventil bekannt.

Ein weiteres bekanntes Konzept für eine Pumpenregelung verwendet eine direkte Regelung ohne Vorsteuerung mit umschaltbarer Wirkfläche für den zu regelnden Pumpendruck. Diese Regelung ist weniger genau und erfüllt damit nicht in allen Fällen die gestellten Anforderungen.

Ausgehend von diesem Sachverhalt liegt der Erfindung die Aufgabe zugrunde, ein Druckregelventil zu schaffen, welches in einfacher Weise, mit hoher Genauigkeit und unabhängig vom Temperaturverhalten eine genaue Regelung ermöglicht und somit die hydraulische Regelung des Pumpendrucks verbessert und vereinfacht.

Zur Lösung dieser Aufgabe wird vorgeschlagen, dass an dem zweiten Ende der Ventilhülse ein Elektromagnet angeordnet ist, dessen Hubkolben über eine Korrekturfeder mit dem zweiten Ende des Ventilschiebers in Wirkverbindung steht, wobei die Federkraft der Korrekturfeder durch den Elektromagneten veränderbar ist.

Gemäß der Erfindung wird der Sollwert für den Druck nicht wie üblich durch eine Druckregelfeder, sondern durch zwei Federn erzeugt, nämlich eine Druckregelfeder und eine Korrekturfeder. Dabei wirkt die Druckregelfeder immer mit einer nur geringfügig durch die Position des Ventilschiebers veränderlichen Kraft, während die Korrekturfeder mit einer stark veränderlichen Kraft auf den Ventilschieber einwirkt, die vor allem von der Position des Hubkolbens des Schaltmagneten abhängig ist. Mit der Erfindung wird ein hydraulisch stufenlos arbeitendes Regelventil realisiert, das seitens der elektromagnetischen Signalverarbeitung für den Sollwert schaltend arbeitet. Dies geschieht durch die beiden Federn, also die Druckregelfeder und die Korrekturfeder, von denen die Korrekturfeder in ihrer Vorspannung durch den Hubkolben des Magneten beeinflusst wird.

Bevorzugt ist dabei vorgesehen, dass der Hubkolben bei nicht erregtem Elektromagneten an einer dem Ventilschieber abgewandten Bodenfläche des Gehäuses des Elektromagneten anliegt und bei erregtem Elektromagneten an einem dem Ventilschieber zugewandten Konus des Elektromagneten anliegt.

Hierdurch ist es ermöglicht, die Sollwerte für den Druck mit hoher Genauigkeit einzustellen, da sich der Hubkolben zwischen zwei festen Anschlägen bewegt und außer während der Umschaltung jeweils an einem der Anschläge anliegt. Der Hubkolben des Elektromagneten bewegt sich in Abhängigkeit von der Eingangsspannung zwischen dem ersten und dem zweiten Anschlag. Die Druckregelfeder befindet sich zwischen einem vorzugsweise mechanisch verstellbarem Anschlag und dem Ventilschieber, während die zweite Feder, nämlich die Korrekturfeder, sich zwischen dem Ventilschieber und dem Hubkolben abstützt.

Vorteilhafte Weiterbildungen der Erfindung sind in den Unteransprüchen angegeben.

Bezüglich der hydraulischen Regelung erfolgt die Lösung der Aufgabe dadurch, dass zwei mögliche Sollwerte angesteuert werden, wobei die Auswahl des Sollwertes durch ein elektrisches Signal erfolgt, das aus einer geschalteten Spannung besteht. Die Ansteuerung des Magneten erfolgt durch die geschaltete Spannung ohne besondere Anforderungen (fahrzeugüblicher Spannungsbereich), was den Vorlieben vieler Anwender entspricht. Das Regelventil vergleicht den aktuellen Pumpendruck mit dem Drucksollwert und gibt in Abhängigkeit von dem Regelfehler einen hydraulischen Strom von der Pumpe zu einem Stellzylinder oder von dem Stellzylinder zum Rücklauf frei. Dazu wird der Druck auf eine Wirkfläche an dem Ventilschieber geleitet, damit er dort eine Kraft erzeugt, die mit anderen Kräften verglichen werden kann.

Diese Regelung ist einfach und kostengünstig aufgebaut, besteht aus möglichst wenigen Teilen und kann insbesondere bei widrigen Umgebungsbedingungen, wie die im Verbrennungsmotor vorherrschenden Umgebungsbedingungen (Temperatur, Erschütterungen, Ölverschmutzung) die übliche Zeit ohne Ausfallrisiko ertragen. Sie arbeitet dabei insbesondere für den kleineren der beiden auszuwählenden Drücke mit hoher statischer Genauigkeit. Das Ventil entspricht in seiner Unempfindlichkeit gegenüber Erschütterungen und Temperaturänderungen in vorteilhafter Weise den Anforderungen des Einsatzes im Verbrennungsmotor. Es lässt sich eine hohe Regelgenauigkeit für den niedrigeren der beiden Drücke erreichen, denn der Sollwert lässt sich im Prüfstand einstellen. Die Regelgenauigkeit bleibt über die Lebensdauer erhalten, denn sie ist durch geometrische Abmessungen bedingt. Die Herstellkosten einer Regelung mit diesem Ventil sind geringer als bei bekannten Lösungen.

Bei einer vorteilhaften Ausführung ist vorgesehen, dass bei einem Ausfall des elektrischen Signals der höhere der beiden möglichen Sollwerte ausgewählt wird.

Wenn der Schaltmagnet bestromt ist, steht der Hubkolben am vorderen Anschlag und spannt die zweite Feder zusätzlich. Die zweite Feder hat eine hohe Kraft. Da diese den Pumpendruck unterstützt, stellt sich ein niedriger geregelter Druck ein. Vorteilhaft steht der Hubkolben am hinteren Anschlag und spannt die zweite Feder nicht zusätzlich, wenn der Schaltmagnet nicht bestromt ist. Deshalb ist die Kraft der zweiten Feder sehr gering und unterstützt den Pumpendruck nur wenig in seiner Wirkung, damit stellt sich ein hoher geregelter Druck ein.

Vorteilhaft ist zur Einstellung des Ventils an einem Prüfstand eine Einpressbuchse vorgesehen, die maßgeblich für die Federvorspannung der Druckregelfeder ist. Diese kann vorteilhaft solange verschoben werden, bis der geforderte Regeldruck erreicht ist. Auf diese Weise wird der niedrigere der beiden Regeldrücke eingestellt. Dabei muss während der Einstellung der Magnet bestromt sein.

Alternativ kann auch der höhere der beiden Regeldrücke am Produktionsprüfstand eingestellt werden, wozu der Magnet bei der Einstellung nicht bestromt wird.

Zur Verminderung des Stromverbrauchs des Magneten im eingeschalteten Zustand ist es vorteilhaft, den Magneten mit einer stark nichtlinearen Kraft-Hub-Kennlinie auszustatten. Diese Kennlinie wird so optimiert, dass eine ausreichende Haltekraft mit minimaler elektrischer Spannung erreicht wird. Dann muss allerdings die Ansteuerung des Magneten zwischen der Einschaltspannung und der Haltespannung unterscheiden.

Bevorzugt ist bei dem Ventil der Ventilschieber als Stufenkolben ausgeführt. Die Wirkfläche ist gleich der Flächendifferenz zwischen dem größeren und dem kleineren Schieberdurchmesser. Die Druckmessung für die Regelung erfolgt an der Differenzfläche zwischen dem großen Schieberdurchmesser und dem kleineren Schieberdurchmesser.

Die Erfindung ist nachstehend anhand der Zeichnungen näher erläutert.

Es zeigt:
- Figur 1: erfindungsgemäßes Druckregelventil im Mittellängsschnitt gesehen bei unbestromtem Elektromagneten;
- Figur 2: desgleichen bei bestromtem Elektromagneten;
- Figur 3: ein Prinzipschaltbild einer hydraulischen Regelanordnung.

In der Zeichnung ist ein Druckregelventil 1 mit einem in einer Ventilhülse 2 axial zur Mittellängsachse 3 der Ventilhülse 2 begrenzt verschieblich angeordneten Ventilschieber 4 gezeigt. An einem ersten Ende der Ventilhülse 2 (in der Zeichnung links) ist eine Druckregelfeder 5 angeordnet, gegen die der Ventilschieber 4 verschieblich ist und an der der Ventilschieber 4 sich mit seinem ersten Ende 6 abstützt. Der Ventilschieber 4 ist in Form eines abgestuften Schiebers ausgebildet, wobei der Ventilschieber 4 durch umlaufende Nuten gebildete Strömungskanäle 7,8 und Steuerflächen, insbesondere 9,10, aufweist. Die Ventilhülse 2 weist dazu entsprechende Durchgangsbohrungen 11,12,13 auf, die je nach Stellung des Ventilschiebers 4 mit den durch die Nuten gebildeten Strömungskanälen 7 beziehungsweise 8 in Verbindung stehen. Eine erste Durchgangsbohrung 11 ist über eine entsprechende Leitung mit einem Speichergefäß 14, beispielsweise der Ölwanne eines Brennkraftmotors 15, verbunden. Dieser Ausgang ist mit T bezeichnet. Die zweite Durchgangsbohrung 12 ist mit einem Arbeitsanschluss A verbunden, während eine dritte Durchgangsbohrung 13 mit einem Druckanschluss P eines Hydraulikkreises in Verbindung steht.

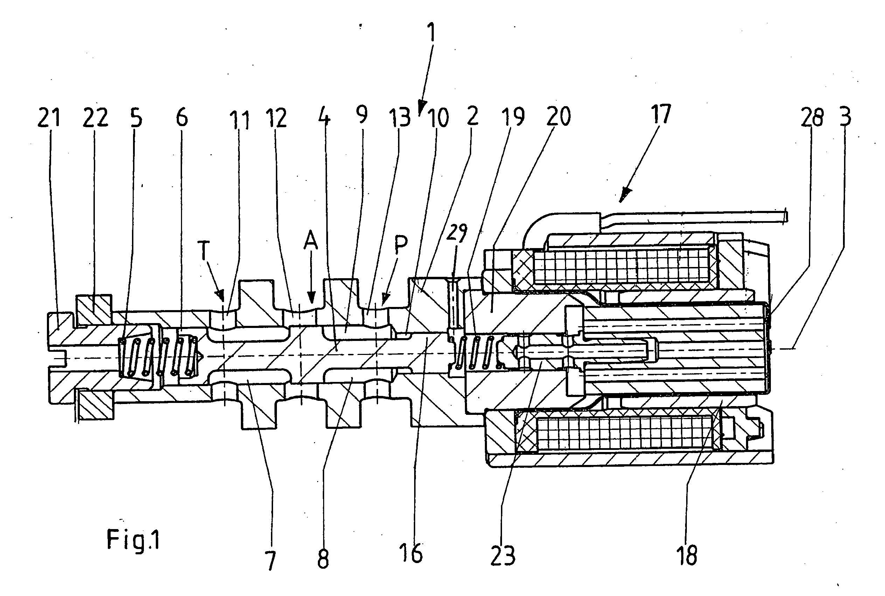

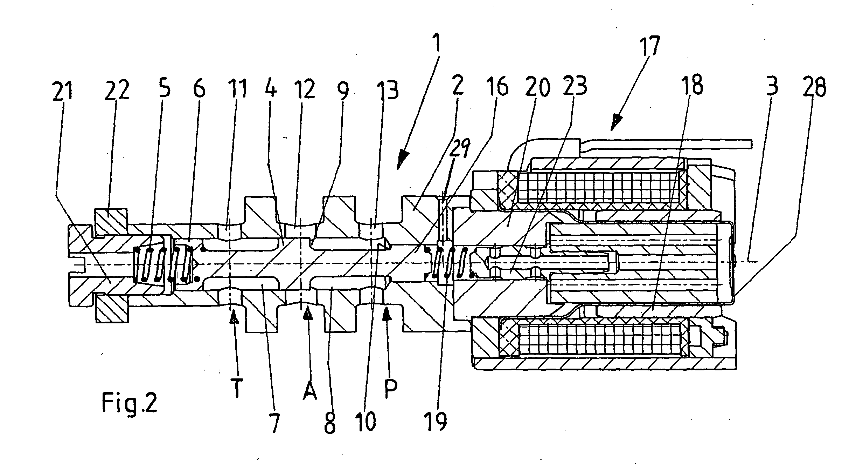

An dem zweiten Ende der Ventilhülse 2 ist ein Elektromagnet 17 angeordnet, dessen Hubkolben 18 über eine Korrekturfeder 19 mit dem zweiten Ende 16 des Ventilschiebers 4 in Wirkverbindung steht. Die Federkraft der Korrekturfeder 19 ist durch den Elektromagneten 17 veränderbar. Bei der in der Zeichnung dargestellten Ausführungsform liegt der Hubkolben 18 bei nicht erregtem Elektromagneten 17 an einer dem Ventilschieber 4 abgewandten Bodenfläche 28 des Gehäuses des Elektromagneten 17 an. Dies ist in Figur 1 gezeigt. In Figur 2 ist gezeigt, dass der Hubkolben 18 bei erregtem Elektromagneten 17 an einem dem Ventilschieber 4 zugewandten Konus 20 des Elektromagneten 17 anliegt. Dabei hält ein Absatz an dem Stößel 23 einen Mindestabstand zwischen dem Kolben 18 und dem Konus 20. Der Elektromagnet umfasst übliche Bauteile wie Spule, Joch, Gehäuse sowie elektrische Anschlüsse.

Wie insbesondere aus Figur 1 ersichtlich, ist die Korrekturfeder 19 bei nicht erregtem Elektromagneten 17 nahezu oder vollständig ungespannt zwischen dem Ventilschieber 4 und dem Hubkolben 18 angeordnet. Der Ventilschieber 4 ist nahe seines zweiten Endes 16 im Durchmesser verringert ausgebildet und auch die Ventilhülse 2 ist in diesem Bereich angepasst verjüngt. Im Bereich zwischen der Durchmesserverringerung und dem nicht im Durchmesser verringerten Bereich des Ventilschiebers 4 ist der erste Strömungskanal 8 durch die umlaufende Nut gebildet, wobei deren dem zweiten Ende des Ventilschiebers 4 zugewandte Nutflanke 10 geringere Höhe aufweist, als die dem zweiten Ende abgewandte Flanke 9, so dass Differenzflächen für das Hydraulikmedium gebildet sind, wobei der erste Strömungskanal 8 bei nicht erregtem Elektromagneten 17 mit dem Druckanschluss P in Verbindung steht und bei erregtem Magneten der Ventilschieber 4 in eine Lage verschoben ist, in der der erste Strömungskanal 8 mit dem Druckanschluss P und dem Arbeitsanschluss A in Verbindung steht.

Die kleinere Stirnfläche des Ventilschiebers wird über eine Bohrung 29 druckentlastet, indem diese Bohrung eine Verbindung zum Anschluss T und folglich zum Speichergefäß herstellt.

Der Ventilschieber 4 weist nahe seines ersten Endes 6 einen zweiten Strömungskanal 7, gebildet durch eine entsprechende Umfangsnut, auf, der bei nicht erregtem Elektromagneten 17 mit dem Arbeitsanschluss A und über den Anschluss T mit dem Speichergefäß in Verbindung steht. Bei erregtem Elektromagneten 17 steht der Strömungskanal nur mit dem Speichergefäß über Anschluss T in Verbindung.

In das erste Ende der Ventilhülse 2 (in der Zeichnung links) ist eine Einpressbuchse 21 eingepresst oder eine entsprechende Stellschraube eingeschraubt, die eine Führungsausnehmung für das eine Ende der Druckregelfeder 5 aufweist, deren anderes Ende in eine axiale Ausnehmung an der Stirnseite des ersten Endes des Ventilschiebers 4 eingreift. Die Stellschraube 21 beziehungsweise die Einpressbuchse kann mit einer Kontermutter 22 gesichert sein.

Im Ausführungsbeispiel ist die Druckregelfeder 5 und ebenso die Korrekturfeder 19 als Schraubendruckfeder ausgebildet.

Der Hubkolben 18 des Elektromagneten 17 weist einen Stößel 23 auf, der einen Konus 20 als Bestandteil des Magnetkreises des Elektromagneten 17 durchgreift, wobei die Korrekturfeder 19 in die Durchgriffslochung des Konus 20 eingreift und sich am Stößel 23 unmittelbar abstützt. Dabei kann ein Bund an dem Stößel 23 einen Mindestabstand zwischen Hubkolben 18 und Konus 20 sicherstellen.

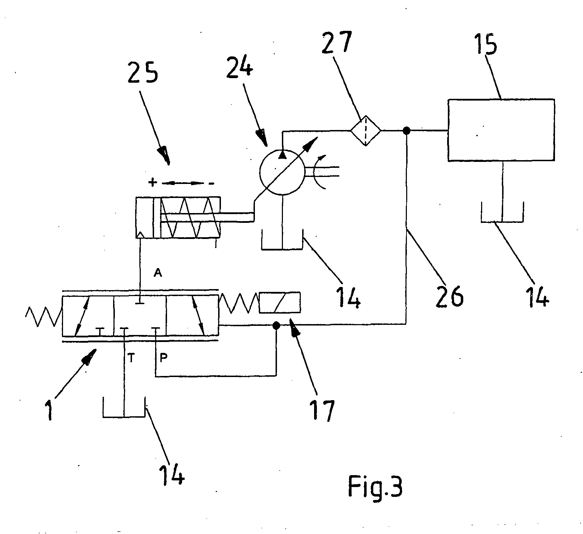

Vorzugsweise ist das Druckregelventil 1 Bestandteil einer hydraulischen Regelanordnung, die in Figur 3 schematisch veranschaulicht ist. Hierbei erfolgt mittels des Druckregelventils 1 die Steuerung oder Vorsteuerung eines Verstellorgans, insbesondere einer regelbaren Verstellpumpe 24, welche die Brennkraftmaschine 15 mit Schmieröl oder Druckflüssigkeit versorgt.

Das an die erste Durchgangsbohrung 13 angeschlossene Speichergefäß 14 ist beispielsweise die Ölwanne der Brennkraftmaschine 15. Der Arbeitsanschluss A ist an einen Stellzylinder 25 angeschlossen, mittels dessen das Verstellorgan, insbesondere die Verstellpumpe 24 einstellbar ist, wobei das Verstellorgan eingangsseitig an das Speichergefäß 14 angeschlossen ist und ausgangsseitig an die Brennkraftmaschine 15. Zudem ist im Ausführungsbeispiel ausgangsseitig eine Verbindungsleitung 26 gezeigt, die als Druckanschluss an die dritte Durchgangsbohrung 13 angeschlossen ist. Bei unbestromtem Elektromagneten 17 wird durch das Druckregelventil 1 ein erster Solldruck eingestellt, während bei bestromtem Elektromagneten 17 ein zweiter Solldruck eingestellt ist, der sich von dem ersten Solldruck unterscheidet. Vorzugsweise ist der erste Solldruck größer als der zweite Solldruck. Dies bedeutet, dass bei nicht geschaltetem Elektromagneten 17 der Hydraulikkreis mit Hochdruck versorgt wird. Bei geschaltetem Elektromagneten 17 wird der Hydraulikkreis mit niedrigerem Druck versorgt. Die Schaltung des Elektromagneten 17 erfolgt rein elektrisch durch einen entsprechenden Schalter, der beispielsweise von dem elektronischen Motormanagement der Brennkraftmaschine 15 gesteuert wird. Bei Inbetriebnahme der Brennkraftmaschine 15 steht Hochdruck im Hydraulikkreis an. Bei normalen Betriebsbedingungen, also bei normaler Drehzahl, Temperatur und Last des Motors wird der Elektromagnet 17 geschaltet und es stellt sich ein niedrigerer Druck im Hydraulikkreis zur Versorgung der Brennkraftmaschine ein. In Abhängigkeit von den Betriebsbedingungen, also bei besonderer Beanspruchung der Brennkraftmaschine kann der Elektromagnet 17 abgeschaltet werden, so dass sich das Druckregelventil wieder in die Ausgangsposition verstellt, in der der Hydraulikkreis mit Hochdruck versorgt wird. Bei Ausfall des Elektromagneten 17 stellt sich in jedem Falle Hochdruck ein, so dass die ordnungsgemäße Versorgung der Brennkraftmaschine 15 sichergestellt ist. In der Zeichnungsfigur 3 ist das Druckregelventil 1 mit den entsprechenden Stellfedern und dem Elektromagneten 17 rein schematisch dargestellt und ebenso die entsprechenden Anschlüsse sowie die weiteren Betriebselemente. Nur der Vollständigkeit halber ist angemerkt, dass bei 27 noch ein Filter für das Hydraulikmedium vorgesehen ist.

## Patentansprüche

1. Druckregelventil (1) mit einem in einer Ventilhülse (2) axial zur Mittellängsachse (3) der ventilhülse (2) begrenzt verschieblich angeordneten Ventilschieber (4), einer an einem ersten Ende der Ventilhülse (2) angeordneten Druckregelfeder (5), gegen die der Ventilschieber (4)-verschieblich ist und an der der Ventilschieber (4) sich mit seinem ersten Ende (6) abstützt, wobei der Ventilschieber (4) durch umlaufende Nuten gebildete Strömungskanäle (7,8) und Steuerflächen (9,10) aufweist und die Ventilhülse (2) in ihrem Mantel Durchgangsbohrungen (11,12,13) aufweist, die je nach Stellung des Ventilschiebers (4) mit den durch die Nut gebildeten Strömungskanälen (7,8) in Verbindung stehen, wobei eine erste Durchgangsbohrung (11) mit einem Speichergefäß (14), eine zweite Durchgangsbohrung (12) mit einem Arbeitsanschluss (A) und eine dritte Durchgangsbohrung (13) mit einem Druckanschluss (P) eines Hydraulikkreises in Verbindung steht, wobei an dem zweiten Ende der Ventilhülse (2) ein Elektromagnet (17) angeordnet ist, **dadurch gekennzeichnet, dass** der Hubkolben (18) des Elektromagnets über eine Korrekturfeder (19) mit dem zweiten Ende (16) des Ventilschiebers (4) in wirkverbindung steht, wobei die Federkraft der Korrekturfeder (19) durch den Elektromagneten (17) veränderbar ist.

2. Druckregelventil nach Anspruch 1, **dadurch gekennzeichnet, dass** der Hubkolben (18) bei nicht erregtem Elektromagneten (17) an einer dem Ventilschieber abgewandten Bodenfläche (28) des Gehäuses des Elektromagneten (17) anliegt und bei erregtem Elektromagneten (17) an einem dem Ventilschieber (4) zugewandten Konus (20) des Elektromagneten (17) anliegt.

3. Druckregelventil nach einem der Ansprüche 1 oder 2, **dadurch gekennzeichnet, dass** die Korrekturfeder (19) bei nicht erregtem Elektromagneten.(17) nahezu oder vollständig ungespannt zwischen Ventilschieber (4) und dem Hubkolben (18) angeordnet ist.

4. Druckregelventil nach einem der Ansprüche 1 bis 3, dadurch gekexinzeichnet, dass der Ventilschieber (4) nahe seines zweiten Endes (16) im Durchmesser verringert ausgebildet ist und die Ventilhülse (2) eine diesem verjüngten Bereich angepasste verjüngte Aufnahmebohrung für den Ventilschieber (4) aufweist, wobei im Bereich zwischen der Durchmesserverringerung und dem nicht im Durchmesser verringerten Bereich des Ventilschiebers (4) ein erster Strömungskanal (8) durch eine umlaufende Nut gebildet ist, deren dem zweiten Ende (16) des Ventilschiebers (4) zugewandte Nutflanke (10) geringere Höhe aufweist als die dem zweiten Ende (16) abgewandte Flanke (9), so dass Differenzflächen für das Hydraulikmedium gebildet sind, wobei der erste Strömungskanal (8) bei nicht erregtem Elektromagneten (17) mit dem Druckanschluss (P) in Verbindung steht und bei erregtem Magneten (17) der Ventilschieber (4) in eine Lage verschoben ist, in der der erste Strömungskanal (8) mit dem Druckanschluss (P) und dem Arbeitsanschluss (A) in Verbindung steht.

5. Druckregelventil nach einem der Ansprüche 1 bis 4, **dadurch gekennzeichnet, dass** die Fläche am Ende des verjüngten Bereichs des Ventilschiebers über die Querbohrung 29 mit dem Speichergefäß (T, 14) verbunden ist und druckentlastet ist.

6. Druckregelventil nach einem der Ansprüche 1 bis 5, **dadurch gekennzeichnet, dass** der Ventilschieber (4) nahe seines ersten Endes (6) einen zweiten Strömungskanal (7) -gebildet durch eine Umfangsnut- aufweist, der bei nicht erregtem Elektromagneten (17) mit dem Arbeitsanschluss (A) und dem Speichergefäß (T,14) in Verbindung steht und bei erregtem Elektromagneten (17) nur mit dem Speichergefäß (T,14) in Verbindung steht.

7. Druckregelventil nach einem der Ansprüche 1 bis 6, **dadurch gekennzeichnet, dass** in das erste Ende der Ventilhülse (2) eine Einpressbuchse (21) eingepresst oder eine Stellschraube eingeschraubt ist, die eine Führungsausnehmung für das eine Ende der Druckregelfeder (5) aufweist, deren anderes Ende in eine axiale Ausnehmung an der Stirnseite des ersten Endes des Ventilschiebers (4) eingreift.

8. Druckregelventil nach Anspruch 7, **dadurch gekennzeichnet, dass** die Stellschraube (21) mit einer Kontermutter (22) gesichert ist.

9. Druckregelventil nach einem der Ansprüche 1 bis 8, **dadurch gekennzeichnet, dass** die Druckregelfeder (5) und/oder die Korrekturfeder (19) als Schraubendruckfeder ausgebildet ist.

10. Druckregelventil nach einem der Ansprüche 1 bis 9, **dadurch gekennzeichnet, dass** der Hubkolben (18) des Elektromagneten (17) einen Stößel (23) aufweist, der einen Konus (20) als Bestandteil des Magnetkreises des Elektromagneten (17) durchgreift, wobei die Korrekturfeder (19) in die Durchgriffslochung des Konus (20) eingreift und sich am Stößel (23) abstützt.

11. Hydraulische Regelanordnung mit einem Druckregelventil (1) nach einem der Ansprüche 1 bis 10, wobei mittels des Druckregelventils (1) die Steuerung oder Vorsteuerung eines Verstellorgans erfolgt, insbesondere einer Verstellpumpe (24), das oder die eine Brennkraftmaschine (15) mit Schmieröl und/oder Druckflüssigkeit versorgt, wobei das an die erste Durchgangsbohrung (11) angeschlossene Speichergefäß (14) eine Ölwanne der Brennkraftmaschine (15) ist, der Arbeitsanschluss (A) an einen Stellzylinder (25) angeschlossen ist, mittels dessen das Verstellorgan, insbesondere die Verstellpumpe (24), einstellbar ist, wobei das erste Verstellorgan eingangsseitig an das Speichergefäß (14), insbesondere die Ölwanne angeschlossen ist und ausgangsseitig an die Brennkraftmaschine (15), wobei zudem vorzugsweise ausgangsseitig eine Verbindungsleitung (26) abgezweigt ist, die als Druckanschluss (P) an die dritte Durchgangsbohrung (13) angeschlossen ist, und wobei bei unbestromtem Elektromagneten (17) durch das Druckregelventil (1) ein erster Solldruck und bei bestromtem Elektromagneten (17) ein zweiter Solldruck eingestellt wird.

12. Hydraulische Regelanordnung nach Anspruch 11, **dadurch gekennzeichnet, dass** der erste Solldruck größer als der zweite Solldruck ist.

13. Hydraulische Regelanordnung nach einem der Ansprüche 11 oder 12, **dadurch gekennzeichnet, dass** der Elektromagnet (17) in Abhängigkeit vom Betriebszustand (Temperatur, Last und/oder Drehzahl) der Brennkraftmaschine (15) geschaltet wird, also bestromt oder nicht bestromt ist.

## Claims

1. A pressure control valve (1) comprising a valve slide (4) arranged displaceably in a limited manner in a valve sleeve (2), axially to the central longitudinal axis (3) of the valve sleeve (2), a pressure control spring (5) arranged at a first end of the valve sleeve (2), against which the valve slide (4) is displaceable and at which the valve slide (4) with its first end (6) is supported, the valve slide (4) comprising flow channels (7, 8) formed by circumferential grooves and control surfaces (9, 10), and the valve sleeve (2) having in its sheath through-holes (11, 12, 13) that, depending on the position of the valve slide (4), are in communication with the flow channels (7, 8) formed by the groove, a first through-hole (11) being in communication with a storage vessel (14), a second through-hole (12) being in communication with a working port (A), and a third through-hole (13) being in communication with a pressure port (P) of a hydraulic circuit, at the second end of the valve sleeve (2) a solenoid (17) being arranged, **characterized in that** the reciprocating piston (18) of the solenoid is in operative connection via a correction spring (19) with the second end (16) of the valve slide (4), with the spring force of the correction spring (19) being variable by the solenoid (17).

2. The pressure control valve according to claim 1, **characterized in that** the reciprocating piston (18), when the solenoid (17) is not energized, rests against a bottom surface (28) of the housing of the solenoid (17) facing away from the valve slide, and, when the solenoid (17) is energized, rests against a cone (20) of the solenoid (17) facing toward the valve slide (4).

3. The pressure control valve according to one of claims 1 or 2, **characterized in that** the correction spring (19), when the solenoid (17) is not energized, is arranged in a nearly or completely untensioned manner between the valve slide (4) and the reciprocating piston (18).

4. The pressure control valve according to one of claims 1 to 3, **characterized in that** the valve slide (4) is formed near its second end (16) with a reduced diameter, and the valve sleeve (2) comprises a tapered receiving hole adapted to this reduced-diameter portion for the valve slide (4), in the area between the reduced diameter and the non-reduced diameter portion of the valve slide (4), a first flow channel (8) being formed by a circumferential groove, the flank (10) of which facing toward the second end (16) of the valve slide (4) has a lower height than the flank (9) facing away from the second end (16), so that differential surfaces for the hydraulic medium are formed, the first flow channel (8), when the solenoid (17) is not energized, being in communication with the pressure port (P), and when the solenoid (17) is energized, the valve slide (4) being moved to a position, in which the first flow channel (8) is in communication with the pressure port (P) and the working port (A).

5. The pressure control valve according to one of claims 1 to 4, **characterized in that** the surface at the end of the tapered portion of the valve slide is connected via the transverse hole (29) with the storage vessel (T, 14) and is depressurized thereby.

6. The pressure control valve according to one of claims 1 to 5, **characterized in that** the valve slide (4) close to its first end (6) has a second flow channel (7) - formed by a circumferential groove - being, when the solenoid (17) is not energized, in communication with the working port (A) and the storage vessel (T, 14), and being, when the solenoid (17) is energized, in communication with the storage vessel (T, 14) only.

7. The pressure control valve according to one of claims 1 to 6, **characterized in that** a press-in bush (21) is incorporated in the first end of the valve sleeve (2), or a set screw is screwed therein, which has a guide recess for the one end of the pressure control spring (5), the other end of which engages in an axial recess on the front face of the first end of the valve slide (4).

8. The pressure control valve according to claim 7, **characterized in that** the set screw (21) is secured with a lock nut (22).

9. The pressure control valve according to one of claims 1 to 8, **characterized in that** the pressure control spring (5) and/or the correction spring (19) is formed as a helical compression spring.

10. The pressure control valve according to one of claims 1 to 9, **characterized in that** the reciprocating piston (18) of the solenoid (17) comprises a plunger (23) passing through a cone (20) as part of the magnetic circuit of the solenoid (17), the correction spring (19) engaging in the passage hole of the cone (20) and being supported at the plunger (23).

11. A hydraulic control assembly comprising a pressure control valve (1) according to one of claims 1 to 10, wherein by means of the pressure control valve (1) the control or pilot control of an adjusting element is carried out, in particular of an adjusting pump (24) that supplies an internal combustion engine (15) with lubricating oil and/or pressure fluid, wherein the storage vessel (14) connected to the first through-hole (11) is an oil pan of the internal combustion engine (15), the working port (A) being connected to a control cylinder (25), by means of which the adjusting element, in particular the adjusting pump (24), is adjustable, wherein the first adjusting element is connected at the input side to the storage vessel (14), in particular the oil pan, and at the output side to the internal combustion engine (15), wherein further preferably at the output side a connecting line (26) is diverted, which is connected as a pressure port (P) to the third through-hole (13), and wherein, when the solenoid (17) is not energized, a first set pressure is adjusted by the pressure control valve (1), and when the solenoid (17) is energized, a second set pressure is s adjusted by the pressure control valve (1) .

12. The hydraulic control assembly according to claim 11, **characterized in that** the first set pressure is greater than the second set pressure.

13. The hydraulic control assembly according to one of claims 11 or 12, **characterized in that** the solenoid (17) is operated, i.e. is energized or not energized, depending on the operating conditions (temperature, load and/or speed) of the internal combustion engine (15).

## Revendications

1. Soupape de réglage de pression (1) comprenant un coulisseau de soupape (4) monté de façon à se déplacer de façon limitée dans une douille de soupape (2), axialement à l'axe longitudinal central (3) de la douille de soupape (2), un ressort de réglage de pression (5) arrangé à une première extrémité de la douille de soupape (2), contre laquelle le coulisseau de soupape (4) est déplaçable et à laquelle le coulisseau de soupape (4) avec sa première extrémité (6) s'appuie, le coulisseau de soupape (4) comprenant des passages d'écoulement (7, 8) réalisés par des rainures circonférentielles et des surfaces de commande (9, 10), et la douille de soupape (2) ayant dans son enveloppe des trous traversants (11, 12, 13) qui, selon la position du coulisseau de soupape (4), sont en communication avec les passages d'écoulement (7, 8) formés par la rainure, un premier trou traversant (11) étant en communication avec un récipient de réserve (14), un deuxième trou traversant (12) étant en communication avec un raccord de travail (A), et un troisième trou traversant (13) étant en communication avec un raccord de pression (P) d'un circuit hydraulique, un électro-aimant (17) étant arrangé à la deuxième extrémité de la douille de soupape (2), **caractérisée en ce que** le piston de levage (18) de l'électro-aimant est en connexion de fonctionnement par l'intermédiaire d'un ressort de correction (19) avec la deuxième extrémité (16) du coulisseau de soupape (4), la force du ressort de correction (19) étant variable par l'électro-aimant (17).

2. Soupape de réglage de pression selon la revendication 1, **caractérisée en ce que** le piston de levage (18), si l'électro-aimant (17) n'est pas activé, repose contre une surface basse (28) du boîtier de l'électro-aimant (17) opposée au coulisseau de soupape, et, si l'électro-aimant (17) est activé, repose contre un cône (20) de l'électro-aimant (17) en vis-à-vis du coulisseau de soupape (4).

3. Soupape de réglage de pression selon une des revendications 1 ou 2, **caractérisée en ce que** le ressort de correction (19), si l'électro-aimant (17) n'est pas activé, est arrangé d'une façon presque ou complètement non tendue entre le coulisseau de soupape (4) et le piston de levage (18).

4. Soupape de réglage de pression selon une des revendications 1 à 3, **caractérisée en ce que** le coulisseau de soupape (4) est réalisé près de sa deuxième extrémité (16) avec un diamètre réduit, et la douille de soupape (2) comprend un trou de logement rétréci adapté à cette partie rétrécie pour le coulisseau de soupape (4), dans la partie entre le diamètre réduit et la partie à diamètre non réduit du coulisseau de soupape (4), un premier passage d'écoulement (8) étant réalisé par une rainure circonférentielle, le flanc (10) de laquelle en vis-à-vis de la deuxième extrémité (16) du coulisseau de soupape (4) a une hauteur inférieure à celle du flanc (9) opposé à la deuxième extrémité (16), de façon que des surfaces différentielles pour le milieu hydraulique soient réalisées, le premier passage d'écoulement (8), si l'électro-aimant (17) n'est pas activé, étant en communication avec le raccord de pression (P), et si l'électro-aimant (17) est activé, le coulisseau de soupape (4) étant déplacé à une position, dans laquelle le premier passage d'écoulement (8) est en communication avec le raccord de pression (P) et le raccord de travail (A).

5. Soupape de réglage de pression selon une des revendications 1 à 4, **caractérisée en ce que** la surface à l'extrémité de la partie rétrécie du coulisseau de soupape est raccordée par l'intermédiaire du trou transversal (29) avec le récipient de réserve (T, 14) et est dépressurisée par celui-ci.

6. Soupape de réglage de pression selon une des revendications 1 à 5, **caractérisée en ce que** le coulisseau de soupape (4) près de sa première extrémité (6) a un deuxième passage d'écoulement (7) - réalisé par une rainure circonférentielle - étant, si l'électro-aimant (17) n'est pas activé, en communication avec le raccord de travail (A) et le récipient de réserve (T, 14), et étant, si l'électro-aimant (17) est activé, en communication seulement avec le récipient de réserve (T, 14).

7. Soupape de réglage de pression selon une des revendications 1 à 6, **caractérisée en ce qu'**une bague enfoncée (21) est incorporée dans la première extrémité de la douille de soupape (2), ou une vis d'ajustement est vissée là-dedans, qui a un évidement de guidage pour l'une extrémité du ressort de réglage de pression (5), l'autre extrémité de laquelle s'engrène dans un évidement axial sur le front de la première extrémité du coulisseau de soupape (4).

8. Soupape de réglage de pression selon la revendication 7, **caractérisée en ce que** la vis d'ajustement (21) est bloquée avec un contre-écrou (22).

9. Soupape de réglage de pression selon une des revendications 1 à 8, **caractérisée en ce que** le ressort de réglage de pression (5) et/ou le ressort de correction (19) est réalisé comme ressort de compression hélicoïdal.

10. Soupape de réglage de pression selon une des revendications 1 à 9, **caractérisée en ce que** le piston de levage (18) de l'électro-aimant (17) comprend un poussoir (23) passant par un cône (20) comme partie du circuit magnétique de l'électro-aimant (17), le ressort de correction (19) s'engrenant dans le trou de passage du cône (20) et s'appuyant au poussoir (23).

11. Ensemble de commande hydraulique comprenant une soupape de réglage de pression (1) selon une des revendications 1 à 10, dans lequel au moyen de la soupape de réglage de pression (1) la commande ou la précommande d'un élément d'ajustement est réalisée, en particulier d'une pompe d'ajustement (24), qui alimente un moteur à combustion interne (15) en huile de lubrification et/ou liquide de pression, dans lequel le récipient de réserve (14) raccordé au premier trou traversant (11) est un carter d'huile du moteur à combustion interne (15), le raccord de travail (A) étant lié à un cylindre de commande (25), au moyen duquel l'élément d'ajustement, en particulier la pompe ajustement (24), est réglable, dans lequel le premier élément d'ajustement est lié au côté d'entrée au récipient de réserve (14), en particulier le carter d'huile, et au côté de sortie au moteur à combustion interne (15), dans lequel en outre de préférence au côté de sortie une conduite de communication (26) est ramifiée, qui est raccordée comme raccord de pression (P) au troisième trou traversant (13), et dans lequel, si l'électro-aimant (17) n'est pas activé, une première pression de consigne est ajustée par la soupape de réglage de pression (1), et si l'électro-aimant (17) est activé, une deuxième pression de consigne est ajustée par la soupape de réglage de pression (1).

12. Ensemble de commande hydraulique selon la revendication 11, **caractérisé en ce que** la première pression de consigne est supérieure à la deuxième pression de consigne.

13. Ensemble de commande hydraulique selon une des revendications 11 ou 12, **caractérisé en ce que** l'électro-aimant (17) est commuté, c'est-à-dire est activé ou n'est pas activé, selon les conditions de fonctionnement (température, charge et/ou vitesse) du moteur à combustion interne (15).
